# EUROPEAN PATENT APPLICATION

(11) **EP 2 712 027 A1**
(43) Date of publication of application: **26.03.2014**
(21) Application number: 11864444.2
(22) Date of filing: 23.12.2011
(51) Int. Cl.: H01Q 15/00, B29C 67/00

(54) **METAMATERIAL DIELECTRIC SUBSTRATE AND PROCESSING METHOD THEREFOR**

(30) Priority: 28.04.2011 CN 201110109060
(71) Applicant: Kuang-Chi Institute of Advanced Technology, Shenzhen, Guangdong 518057 (CN); Kuang-Chi Innovative Technology Ltd., ShenZhen, Guangdong 518034 (CN)
(72) Inventor: LIU, Ruopeng, Shenzhen, Guangdong 518057 (CN); HU, Kan, Shenzhen, Guangdong 518057 (CN); ZHAO, Zhiya, Shenzhen, Guangdong 518057 (CN); MIAO, Xigeng, Shenzhen, Guangdong 518057 (CN)
(74) Representative: Goddar, Heinz J.
(86) International application number: PCT/CN2011/084497
(87) International publication number: WO 2012/146037

(57) **Abstract**

The present invention provides a method for manufacturing a metamaterial dielectric substrate, and a metamaterial dielectric substrate manufactured using the same. According to the metamaterial dielectric substrate and the manufacturing method thereof of the present invention, an arrangement rule of pin-shaped articles in a pin-shaped array may be predetermined during the manufacture, such that the formed metamaterial dielectric substrate has pinhole-shaped arrays arranged in a specific rule. Therefore, the metamaterial dielectric substrate may implement specific modulation functions on an electromagnetic wave such as electromagnetic wave divergence, convergence or deflection, thereby providing a more flexible design for function application of the metamaterial.

## Description

### FIELD OF THE INVENTION

The present invention relates to the field of metamaterial, and in particular, to a process for manufacturing a metamaterial dielectric substrate.

### BACKGROUND OF THE INVENTION

Metamaterials are artificial composite structures or materials engineered to have special physical properties that may not be found in nature. Orderly and exactingly-designed structures in terms of critical material physical dimensions help to break through some restrictions representing natural properties, and thereby achieving metamaterial functions beyond the inherent and natural properties. A metamaterial is formed by stacking or arraying a plurality of layers of metamaterial function sheets. The metamaterial function sheet consists of a dielectric substrate and a plurality of artificial microstructures arranged on the dielectric substrate. The metamaterial provides both properties that can be found in various common materials, and properties that may not be found in the various common materials. A size of a single artificial microstructure is usually less than 1/10 of a wavelength. The artificial microstructure has an electric response or a magnetic response to an externally applied electric or magnetic field and thereby presents an effective permittivity, or an effective magnetic conductivity or a wave impedance. The effective permittivity and the effective magnetic conductivity (or the wave impedance) of an artificial microstructure are subject to the geometric size of the artificial microstructure, and may be artificially designed and controlled. Moreover, the artificial microstructure may possess artificially designed electromagnetic parameters, and thereby generating more grand phenomena.

The dielectric substrate in the present metamaterial function sheet is intended to adapt mechanical properties to the application scenarios so as to fix the artificial microstructure array. The dielectric substrate can be made of ceramics, high polymer materials, teflon, ferroelectric materials, ferrite materials, ferromagnetic materials etc., while a manufacture process thereof varies with the materials selected. The permittivity and the magnetic conductivity of a homogeneous material are constant values. Therefore, the basic function of the dielectric substrate is limited to fixing the artificial microstructure array no matter which material or process is employed for manufacturing the dielectric substrate. The dielectric substrate has no specific electric or magnetic response to an externally applied electric or magnetic field. That is, the dielectric substrate does not support modulation with respect to the electromagnetic waves incident into a metamaterial.

### SUMMARY OF THE INVENTION

A technical problem to be solved by the present invention is to provide a metamaterial dielectric substrate and a method for manufacturing the same, to enable the metamaterial dielectric substrate to have an electric or magnetic response to an externally applied electric or magnetic field so as to implement various electromagnetic modulation functions of the dielectric substrate, thereby expanding applications of metamaterials and achieving more flexible and versatile function designs for metamaterials.

In view of the above, the present invention provides a method for manufacturing a metamaterial dielectric substrate, comprising the following steps.

In step a, a material for manufacturing the metamaterial dielectric substrate is selected and a permittivity of the metamaterial dielectric substrate within a predetermined area is determined according to predetermined properties of a metamaterial, and a duty ratio within the predetermined area is calculated according to the permittivity of the metamaterial dielectric substrate within the predetermined area, wherein the duty ratio is a volume ratio of air gaps per unit volume of the dielectric substrate;

In step b, a mold used for forming the dielectric substrate is set, a protrusion array used for forming the air gaps is arranged in the mold, the protrusion array is formed by arranging a plurality of protrusions, and a volume of the protrusions is controlled to enable the air gaps per unit volume of the dielectric substrate to meet the duty ratio;

In step c, the mold is evenly filled with the material for manufacturing the metamaterial dielectric substrate in a form of liquid, solid powder or a liquid-solid mixture; and

In step d, the material filled in the mold is integrally molded, and demolded, thereby obtaining a metamaterial dielectric substrate after demolding.

During specific implementation, a density of the plurality of protrusions may be changed such that the air gaps per unit volume of the dielectric substrate meet the duty ratio.

During specific implementation, sizes of the plurality of protrusions may be changed such that the air gaps per unit volume of the dielectric substrate meet the duty ratio.

As a specific embodiment, the protrusion array is a pin-shaped array and the protrusions are pin-shaped articles.

As a specific embodiment, the material for manufacturing metamaterial dielectric substrate is melted into liquid under a high temperature before being evenly filled into the mold in step b, and the material for manufacturing the metamaterial dielectric substrate in the mold is integrally formed by cooling in step c.

As a specific embodiment, a liquid material for manufacturing the metamaterial dielectric substrate is a melted polyflon or a mixture of melted prepolymer of epoxy resin and curing agent of the melted prepolymer of epoxy resin

As a specific embodiment, the material for manufacturing the metamaterial dielectric substrate is evenly filled in the mold in a form of solid powder in step b, and the material for manufacturing the metamaterial dielectric substrate in the mold is integrally formed by sintering under a high temperature in step c.

As a specific embodiment, the solid powder is a mixture of ceramic powder and bonding agent.

As a specific embodiment, the material for manufacturing the metamaterial dielectric substrate is evenly filled in the mold in a form of liquid-solid mixture in step b, and the material for manufacturing the metamaterial dielectric substrate in the mold is integrally formed and cured by cooling in step c.

As a specific embodiment, the liquid-solid mixture is a mixture of melted plastic and ceramic powder.

The present invention further provides a metamaterial dielectric substrate, wherein the metamaterial dielectric substrate is provided with a hole-shaped array which is formed by arraying a plurality of hole-shaped gaps.

As a specific embodiment, the plurality of hole-shaped gaps are unevenly arranged with different densities.

As a specific embodiment, the plurality of hole-shaped gaps are unevenly arranged with different volumes.

As a specific embodiment, the plurality of hole-shaped gaps are pinhole shaped.

In the present invention, an arrangement rule of pin-shaped articles in the pin-shaped array of the metamaterial dielectric substrate may be predetermined before manufacture such that the metamaterial dielectric substrate is capable of modulating electromagnetic waves by, for example, diverging, converging or deflecting electromagnetic waves, thereby achieving more flexible designs for function applications of metamaterials.

### BRIEF DESCRIPTION OF THE DRAWINGS

FIG. 1 is a schematic structural view of a metamaterial dielectric substrate according to Embodiment 1;
FIG. 2 is a cross-section view of a metamaterial dielectric substrate according to Embodiment 2; and
FIG. 3 illustrates a cross-section view of a metamaterial dielectric substrate according to Embodiment 3.

### DETAILED DESCRIPTION OF THE INVENTION

The present invention is described in detail with reference to the attached drawings and specific embodiments.

### Embodiment 1

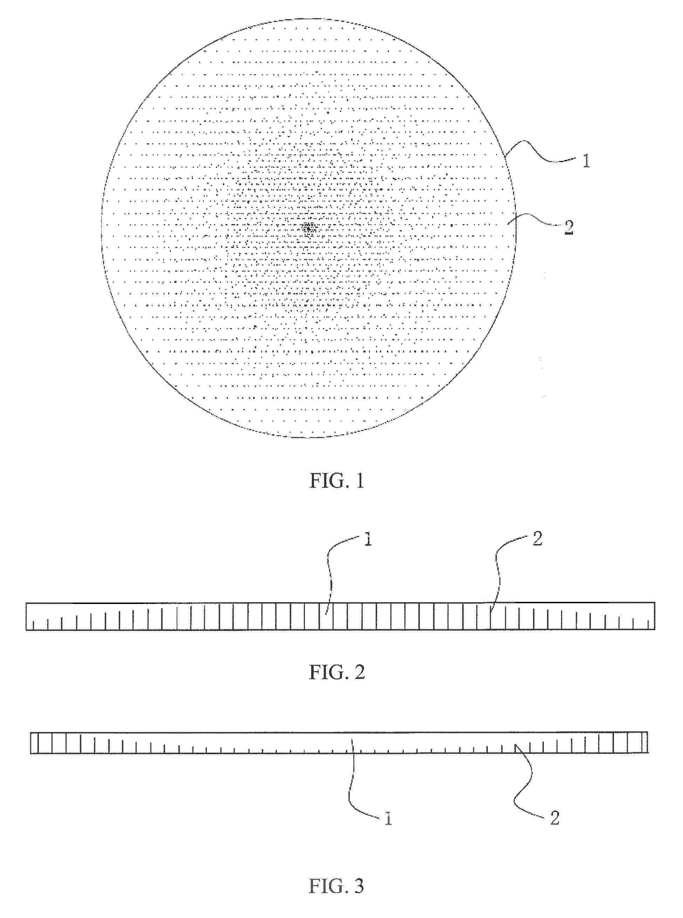

FIG. 1 is a schematic structural view of a metamaterial dielectric substrate according to this embodiment. The metamaterial dielectric substrate 1 is circular-board shaped. A pinhole-shaped array is arranged in the metamaterial dielectric substrate 1. The pinhole-shaped array is formed by arranging a plurality of pinholes 2. For ease of description, the pinhole-shaped array is represented by black dots in the figure, and a base material of the metamaterial dielectric substrate 1 is represented by a blank area. To conveniently calculate and form the metamaterial dielectric substrate with a predetermined duty ratio, pinholes 2 are designed to have the same shape and size and are unevenly arranged with different spacing. The pinhole-shaped array presents an arrangement rule that pinholes are sparsely arranged on the perimeter but densely arranged in the center of the metamaterial dielectric substrate. Pinholes 2 are arranged in an increasing density from the perimeter to the center of the metamaterial dielectric substrate.

A manufacturing method according to this embodiment is as follows:

a. To ensure that the permittivity of the metamaterial dielectric substrate is small in the center and large on the perimeter of the metamaterial dielectric substrate, polyflon is employed as the material for manufacturing the metamaterial dielectric substrate in the embodiment. The permittivity of the metamaterial dielectric substrate in a local area is adjusted by setting air gaps in a local area of the polyflon dielectric substrate. Since a permittivity of air is approximately equal to 1, the permittivity of the metamaterial dielectric substrate in the local area may be adjusted when a volume ratio (i.e. the duty ratio) of the air gaps per unit volume of the local area of the metamaterial dielectric substrate is changed. The larger the duty ratio in the local area of the metamaterial dielectric substrate is, the smaller the permittivity is. On the contrary, the smaller the duty ratio is, the larger the permittivity is. Therefore, the permittivity of the metamaterial dielectric substrate decreases from the perimeter to the center of the metamaterial dielectric substrate by allowing the duty ratio on the metamaterial dielectric substrate to increase from the perimeter to the center of the metamaterial dielectric substrate.

b. To conveniently form the air gaps on the metamaterial dielectric substrate according to a rule, the following method is employed in this embodiment for specific implementation. An injection mold which is used for injecting a circular-board shaped dielectric substrate is set firstly according to the shape and size of the metamaterial dielectric substrate. A pin-shaped array which is used for forming the air gaps while injection molding is arranged in the injection mold. The pin-shaped array is formed by arraying a plurality of pin-shaped articles. The pin-shaped articles are designed to have the same shape and size and are unevenly arranged with different spacing. The pin-shaped array integrally presents an arrangement rule that pinholes are sparsely arranged on the perimeter but densely arranged in the center of the metamaterial dielectric substrate. In this way, the duty ratio of the metamaterial dielectric substrate can be easily enabled to integrally present an arrangement rule that the duty ratio of the metamaterial dielectric substrate is large in the center and small on the perimeter and the duty ratio descends from the center to the perimeter, by controlling arrangement densities of the pin-shaped articles in the pin-shaped array.

c. The polyflon is melted under a high temperature and the melted polyflon is evenly injected into the injection mold.

d. Finally, the polyflon in the injection mold is cooled to make the polyflon cured and formed, and a metamaterial dielectric substrate is obtained after demolding.

Understandably, the air gaps with specific volumes and specific arrangement rules in the embodiment may be formed by employing different protrusion arrays rather than being only limited to the pin-shaped array. Protrusions in the protrusion arrays can be freely designed rather than being only limited to pin-shaped articles. The main objective of the present invention aims at providing control methods as many as possible to flexibly control the duty ratio on the dielectric substrate arranged in a specific rule, thereby controlling the arrangement rule of the permittivity on the metamaterial dielectric substrate.

Understandably, the permittivity of the metamaterial dielectric substrate in the embodiment presenting an arrangement rule that the permittivity is small in the center and large in the perimeter, and changes gradually from small to large is only a specific rule exampled for description. The main object of the present invention is to implement free design for the arrangement rule of the permittivity of the metamaterial dielectric substrate by using the method for manufacturing a metamaterial dielectric substrate. Moreover, the beneficial effects of the present invention also lie in design flexibility and convenience thereof. Meanwhile, as the injection mold is employed for integrally forming, the manufacture method has high efficiency, and is suitable for large scale production.

### Embodiment 2

FIG. 2 is a cross-section view of a metamaterial dielectric substrate according to this embodiment. The metamaterial dielectric substrate 1 is circular-board shaped. A pinhole-shaped array is arranged in the metamaterial dielectric substrate 1. The pinhole-shaped array is formed by arraying a plurality of pinholes 2. Since the pinholes 2 are very small, for ease of description, the pinholes 2 are represented by solid lines in FIG. 2. The number of the solid lines is merely for illustration. The number of the pinholes 2 during specific implementation will be freely set according to specific conditions. A base material of the metamaterial dielectric substrate 1 is represented by a blank area in the figure. To conveniently calculate and form the metamaterial dielectric substrate with a predetermined duty ratio, the pinholes 2 are designed to be unevenly arranged with the same size but different heights. The heights of the pinholes 2 in the pinhole-shaped array are gradually increased from the perimeter to the center of the metamaterial dielectric substrate.

A manufacturing method according to this embodiment is described as follows:
a. To enable a permittivity of the metamaterial dielectric substrate integrally to present an arrangement rule that the permittivity is small in the center and large on the perimeter and changes gradually from small to large, a ceramics base material is employed as a material of the metamaterial dielectric substrate in the embodiment. The permittivity of the metamaterial dielectric substrate in a local area is changed by setting air gaps in a local area of the metamaterial dielectric substrate. Since a permittivity of air is approximately equal to 1 and the ceramics base material usually has a higher permittivity, the permittivity of the metamaterial dielectric substrate in the local area may be changed in a large range when a volume ratio (i.e. the duty ratio) occupied by the air gaps per unit volume of the local area of the metamaterial dielectric substrate is changed. The larger the duty ratio in the local area of the metamaterial dielectric substrate is, the smaller the permittivity thereof is. On the contrary, the smaller the duty ratio is, the larger the permittivity thereof is. Therefore, an arrangement rule that the permittivity of the metamaterial dielectric substrate is small in the center and large on the perimeter and changes gradually from small to large can be presented by enabling the duty ratio on the metamaterial dielectric substrate of the embodiment to present an arrangement rule that the duty ratio is large in the center and small on the perimeter and changes gradually from large to small from the center to the perimeter.
b. To conveniently form the air gaps on the metamaterial dielectric substrate according to the rule, the following method is employed by the embodiment for specific implementation; a forming mold which is used for forming a circular-board shaped dielectric substrate is set firstly according to the shape and size of the metamaterial dielectric substrate. A pin-shaped array which is used for forming the air gaps is arranged in the forming mold. The pin-shaped array is formed by arraying a plurality of pin-shaped articles. Since volumes of the pin-shaped articles can be freely set, the duty ratio of the metamaterial dielectric substrate can be easily enabled to integrally present an arrangement rule that the duty ratio is large in the center and small on the perimeter and gradually changes from large to small from the center to the perimeter by controlling heights of the pin-shaped articles in the pin-shaped array to present an arrangement rule that the pin-shaped articles are high in the center and low on the perimeter and change from high to low from the center to the perimeter.
c. Ceramic powder and bonding agent are evenly filled in the forming mold.
d. The ceramic powder is sintered under a high temperature above 800°C, and a metamaterial dielectric substrate is obtained after demolding.

Understandably, the air gaps with specific volumes and specific arrangement rules in the embodiment may be formed by employing different protrusion arrays rather than being only limited to the pin-shaped array. Protrusions in the protrusion arrays can be freely designed rather than being only limited to pin-shaped articles. The main objective of the present invention is to provide control methods as many as possible to flexibly control the duty ratio on the dielectric substrate arranged in a specific rule, thereby controlling the arrangement rule of the permittivity on the metamaterial dielectric substrate.

Understandably, the permittivity of the metamaterial dielectric substrate in the embodiment presenting an arrangement rule that the permittivity is small in the center and large in the perimeter and changes from small to large is only a specific rule exampled for description. The main objective of the present invention is to implement free design for the arrangement rule of the permittivity of the metamaterial dielectric substrate by using the method for manufacturing a metamaterial dielectric substrate. Moreover, the beneficial effects of the present invention also lie in design flexibility and convenience thereof. Meanwhile, as the injection mold is employed for integrally forming, the manufacture method has high efficiency, and is suitable for large scale production.

### Embodiment 3

FIG. 3 is a cross-section view of a metamaterial dielectric substrate according to this embodiment. The metamaterial dielectric substrate 1 is circular-board shaped. A pinhole-shaped array is arranged in the metamaterial dielectric substrate 1. The pinhole-shaped array is formed by arraying a plurality of pinholes 2. Since the pinholes 2 are very small, for ease of description, the pinholes 2 are represented by solid lines in FIG. 2. The number of the solid lines is merely for illustration. The number of the pinholes 2 during specific implementation will be freely set according to specific conditions. A base material of the metamaterial dielectric substrate 1 is represented by a blank area in the figure. To conveniently calculate and form the metamaterial dielectric substrate with a predetermined duty ratio, the pinholes 2 are designed to be unevenly arranged with the same size but different heights. The heights of the pinholes 2 in the pinhole-shaped array are gradually decreased from the perimeter to the center of the metamaterial dielectric substrate.

A manufacturing method according to this embodiment is described as follows:
a. To enable a permittivity of the metamaterial dielectric substrate integrally to present an arrangement rule that the permittivity is small in the center and large on the perimeter and changes gradually from small to large, a composite material of plastic and ceramics is employed as a material of the metamaterial dielectric substrate in the embodiment. The permittivity of the metamaterial dielectric substrate in a local area is changed by setting air gaps in a local area of the metamaterial dielectric substrate. Since a permittivity of air is approximately equal to 1, the permittivity of the metamaterial dielectric substrate in the local area may be changed in a large range when a volume ratio (i.e. the duty ratio) occupied by the air gaps per unit volume of the local area of the metamaterial dielectric substrate is changed. The larger the duty ratio in the local area of the metamaterial dielectric substrate is, the smaller the permittivity thereof is. On the contrary, the smaller the duty ratio is, the larger the permittivity thereof is. Therefore, an arrangement rule that the permittivity of the metamaterial dielectric substrate is large in the center and small on the perimeter and changes gradually from large to small can be presented by enabling the duty ratio on the metamaterial dielectric substrate of the embodiment to present an arrangement rule that the duty ratio is small in the center and large on the perimeter and changes gradually from small to large from the center to the perimeter.
b. To conveniently form the air gaps on the metamaterial dielectric substrate according to the rule, the following method is employed by the embodiment for specific implementation; a forming mold which is used for forming a circular-board shaped dielectric substrate is set firstly according to the shape and size of the metamaterial dielectric substrate. A pin-shaped array which is used for forming the air gaps is arranged in the forming mold. The pin-shaped array is formed by arraying a plurality of pin-shaped articles. Since volumes of the pin-shaped articles can be freely set, the duty ratio of the metamaterial dielectric substrate can be easily enabled to integrally present an arrangement rule that the duty ratio is small in the center and large on the perimeter, and changes gradually from small to large from the center to the perimeter by controlling heights of the pin-shaped articles in the pin-shaped array to present an arrangement rule that the pin-shaped articles are low in the center and high on the perimeter and changes gradually from high to low from the center to the perimeter.
c. The plastic is melted under a high temperature firstly. Ceramic powder is added into the melted plastic and mixed evenly. Then a liquid-solid mixture of the melted plastic and the ceramic powder is evenly filled into the forming mold.
d. The liquid-solid mixture of the melted plastic and the ceramic powder is cooled under a low temperature so as to be integrally formed and cured in the mold. A metamaterial dielectric substrate is obtained after demolding.

Understandably, the air gaps with specific volumes and specific arrangement rules in the embodiment may be formed by employing different protrusion arrays rather than being only limited to the pin-shaped array. Protrusions in the protrusion arrays can be freely designed rather than being only limited to pin-shaped articles. The main objective of the present invention is to provide control methods as many as possible to flexibly control the duty ratio on the dielectric substrate arranged in a specific rule, thereby controlling the arrangement rule of the permittivity on the metamaterial dielectric substrate.

Understandably, the permittivity of the metamaterial dielectric substrate in the embodiment presenting an arrangement rule of small in the middle and large in the surrounding as well as gradually changed from small to large is only a specific rule exampled for description. The main objective of the present invention is to implement free design for the arrangement rule of the permittivity of the metamaterial dielectric substrate by using the method for manufacturing the metamaterial dielectric substrate. Moreover, the beneficial effects of the present invention also lie in design flexibility and convenience thereof. Meanwhile, as the injection mold is employed for integrally forming, the manufacture method achieves high efficiency, and is suitable for large scale production.

Understandably, selection of specific material for manufacturing the base material of the metamaterial dielectric substrate may be freely made according to the integral value of the permittivity. Specific processes and methods for forming of the metamaterial dielectric substrate may be different depending on different materials selected. Illustrative descriptions are made to the embodiments in the present invention only. Those skilled in the art, under teachings given herein, may make various modifications to the present invention without departing from the spirit and scope of the present invention.

## Claims

1. A method for manufacturing a metamaterial dielectric substrate, comprising:
a. selecting a material for the metamaterial dielectric substrate and determining a permittivity of the metamaterial dielectric substrate within a predetermined area according to predetermined properties of a metamaterial, and calculating a duty ratio of the predetermined area according to the permittivity of the metamaterial dielectric substrate within the predetermined area, the duty ratio being a volume ratio of air gaps per unit volume of the dielectric substrate;
b. setting a mold, the mold used for forming the dielectric substrate, arranging a protrusion array in the mold, the protrusion array used for forming the air gaps, the protrusion array formed by arranging a plurality of protrusions, a volume of the protrusions controlled to enable the air gaps per unit volume of the dielectric substrate to meet the duty ratio;
c. evenly filling the mold with the material for manufacturing the metamaterial dielectric substrate in a form of liquid, solid powder or a liquid-solid mixture; and
d. integrally molding the material filled in the mold, and demolding, thereby obtaining a metamaterial dielectric substrate.

2. The method for manufacturing a metamaterial dielectric substrate according to claim 1, wherein a density of the plurality of protrusions is changed such that the air gaps per unit volume of the dielectric substrate meet the duty ratio.

3. The method for manufacturing a metamaterial dielectric substrate according to claim 1, wherein sizes of the plurality of protrusions are changed such that the air gaps per unit volume of the dielectric substrate meet the duty ratio.

4. The method for manufacturing a metamaterial dielectric substrate according to claim 1, wherein the protrusion array is a pin-shaped array and the protrusions are pin-shaped articles.

5. The method for manufacturing a metamaterial dielectric substrate according to claim 1, wherein the material for manufacturing metamaterial dielectric substrate is melted into liquid under a high temperature to be evenly filled into the mold in step b, and the material for manufacturing the metamaterial dielectric substrate in the mold is integrally formed by cooling in step c.

6. The method for manufacturing a metamaterial dielectric substrate according to claim 5, wherein the liquid material for manufacturing the metamaterial dielectric substrate is a melted polyflon or a mixture of melted prepolymer of epoxy resin and curing agent of the melted prepolymer of epoxy resin.

7. The method for manufacturing a metamaterial dielectric substrate according to claim 1, wherein the material for manufacturing the metamaterial dielectric substrate is evenly filled in the mold in a form of solid powder in step b, and the material for manufacturing the metamaterial dielectric substrate in the mold is integrally formed by sintering under a high temperature in step c.

8. The method for manufacturing a metamaterial dielectric substrate according to claim 7, wherein the solid powder is a mixture of ceramic powder and bonding agent.

9. The method for manufacturing a metamaterial dielectric substrate according to claim 1, wherein the material for manufacturing the metamaterial dielectric substrate is evenly filled in the mold in a form of a liquid-solid mixture in step b, and the material for manufacturing the metamaterial dielectric substrate in the mold is integrally formed and cured by cooling in step c.

10. The method for manufacturing a metamaterial dielectric substrate according to claim 9, wherein the liquid-solid mixture is a mixture of melted plastic and ceramic powder.

11. A metamaterial dielectric substrate manufactured by using a method for manufacturing a metamaterial dielectric substrate according to any one of claims 1 to 10, wherein a hole-shaped array is arranged in the metamaterial dielectric substrate, and the hole-shaped array is formed by arraying a plurality of hole-shaped gaps.

12. The metamaterial dielectric substrate according to claim 11, wherein the plurality of hole-shaped gaps are unevenly arranged with different densities.

13. The metamaterial dielectric substrate according to claim 11, wherein the plurality of hole-shaped gaps are unevenly arranged with different volumes.

14. The metamaterial dielectric substrate according to claim 11, wherein the plurality of hole-shaped gaps are pinhole shaped.
